# EUROPÄISCHE PATENTSCHRIFT

(11) **EP 3 617 428 B1**
(45) Veröffentlichungstag und Bekanntmachung des Hinweises auf die Patenterteilung: **28.07.2021**
(21) Anmeldenummer: 19191836.6
(22) Anmeldetag: 14.08.2019
(51) Int. Cl.: E05B 47/00, E05B 71/00, B62H 5/14, B62J 45/40

(54) **ZWEIRADSCHLOSS**
BICYCLE LOCK
FERMETURE POUR DEUX-ROUES

(30) Priorität: 30.08.2018 DE 102018121245
(43) Veröffentlichungstag der Anmeldung: 04.03.2020
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- CN-A- 106 948 668
- US-A1- 2008 036 596
- US-A1- 2014 266 588

## Beschreibung

Die vorliegende Erfindung betrifft ein Zweiradschloss, insbesondere ein Rahmenschloss für ein Zweirad.

Das Zweiradschloss weist zumindest ein Element auf, das entlang einer definierten Bewegungsbahn beweglich ist. Ein solches Schloss kann insbesondere einen Schlosskörper, einen Bügel, der zwischen einer Offenstellung und einer Geschlossenstellung beweglich ist, insbesondere gelagert oder zumindest geführt ist, sowie einen Riegel umfassen, der zwischen einer Verriegelungsstellung, in der er den Bügel in dessen Geschlossenstellung gegen ein Verlassen der Geschlossenstellung sperrt, und einer Entriegelungsstellung, in der er den Bügel freigibt, an dem Schlosskörper beweglich gelagert ist.

Der Bügel dient in seiner Geschlossenstellung beispielsweise dazu, ein Zweirad mittels des Schlosses zu sichern, z.B. an einem anderen Gegenstand anzuschließen oder eine Bewegung des Zweirads zu blockieren, etwa nach Art eines Speichenschlosses, das die Drehung eines Laufrades verhindert. Der Riegel dagegen wirkt typischerweise nicht mit Gegenständen außerhalb des Schlosses, sondern mit dem Bügel zusammen und dient dazu, den Bügel insbesondere in dessen Geschlossenstellung zu sperren bzw. freizugeben, je nachdem, ob das Schloss verriegelt oder entriegelt ist.

Ein derartiges Zweiradschloss kann zur Verbesserung des Komforts halbautomatisch oder vollautomatisch ausgebildet sein, wobei es zumindest teilweise motorisch antreibbar ist. Das heißt, dass zumindest einzelne Elemente des Schlosses von einem oder mehreren Antriebsmotoren des Schlosses motorisch bewegt werden können. Es muss aber nicht jedes bewegliche Element des Schlosses motorisch antreibbar sein. In der Regel lässt sich ein solches Schloss zumindest motorisch entriegeln, d.h. dass der Riegel motorisch aus der Verriegelungsstellung in die Entriegelungsstellung versetzbar ist, um den Bügel für ein Verlassen seiner Geschlossenstellung freizugeben. Der Riegel kann aber auch, zusätzlich oder alternativ, in die umgekehrte Richtung motorisch versetzbar sein. Zudem kann vorgesehen sein, dass (auch) der Bügel motorisch bewegt werden kann.

Um ein motorisch antreibbares Element des Schlosses zuverlässig bewegen zu können, ist es zweckmäßig, Informationen über die jeweils aktuelle Stellung des Elements erfassen zu können. Auch bei einem nicht motorisch antreibbaren Schloss kann es erwünscht sein, den jeweils aktuellen Zustand des Schlosses anhand der Stellung eines oder mehrerer beweglicher Elemente des Schlosses zu erfassen. Dazu kann beispielsweise ein Sensor vorgesehen sein, der zum Erfassen verschiedener Stellungen zumindest eines entlang einer definierten Bewegungsbahn beweglichen Elements des Schlosses ausgebildet ist. Der Sensor kann insbesondere zum Erfassen der Riegelstellung genutzt werden. Sofern der Riegel gewisse Stellungen, wie z.B. die Verriegelungsstellung, nur dann einnehmen kann, wenn sich der Bügel in einer bestimmten Stellung, z.B. in der Geschlossenstellung, befindet, kann mittels des die Riegelstellung erfassenden Sensors indirekt auch die Stellung des Bügels feststellbar sein.

Der Sensor kann beispielsweise als magnetischer Sensor ausgebildet sein, der mit einem an dem beweglichen Element vorgesehenen Permanentmagneten zusammenwirkt. Die definierte Bewegungsbahn des beweglichen Elements wird dann durch die Bewegungsbahn des Permanentmagneten definiert, die dieser bei regulärer Bewegung des Elements entlang dessen Bewegungsbahn durchläuft. Grundsätzlich kann ein einfacher Magnetschalter als Sensor verwendet werden, der in Abhängigkeit von dem Abstand zwischen dem Permanentmagneten und dem Sensor schaltet, so dass anhand des Schaltzustands zwischen dem Vorliegen und dem Nicht-Vorliegen einer bestimmten Stellung des beweglichen Elements unterschieden werden kann.

Ein solches Zweiradschloss ist im Dokument US 2014/0266588 A1 offenbart.

Es ist eine Aufgabe der Erfindung, ein insbesondere zumindest teilweise motorisch antreibbares Zweiradschloss bereitzustellen, das eine verbesserte Sicherheit vor Manipulationsversuchen aufweist.

Die Aufgabe wird gelöst durch ein Zweiradschloss mit den Merkmalen des Anspruchs 1, durch ein Verfahren zur Detektion von Manipulationsversuchen mit den Merkmalen des Anspruchs 7 sowie durch eine Verwendung nach Anspruch 9. Vorteilhafte Ausführungsformen der Erfindung ergeben sich aus den Unteransprüchen, den Figuren sowie der vorliegenden Beschreibung.

Bei dem erfindungsgemäßen Zweiradschloss ist der als magnetischer Sensor ausgebildete Sensor des Schlosses zur dreidimensionalen magnetischen Erfassung ausgebildet, um von der definierten Bewegungsbahn abweichende Stellungen des beweglichen Elements und/oder mittels externer Magnete vorgenommene Manipulationsversuche zu erfassen. Dass der Sensor zur dreidimensionalen magnetischen Erfassung ausgebildet ist, heißt beispielsweise, dass es möglich ist, mittels des Sensors die Position eines Permanentmagneten im Raum, speziell in drei Dimensionen, zu bestimmen und/oder dass sich mittels des Sensors nicht nur die Stärke eines Magnetfeldes, sondern auch dessen räumliche Ausrichtung, etwa als dreidimensionaler Vektor, bestimmen lässt. Insofern stellt ein solcher magnetischer 3D-Sensor differenziertere Informationen bereits als ein schlichter Magnetschalter, aber auch als ein magnetischer Sensor, der lediglich den Abstand eines Permanentmagneten vom Sensor oder lediglich den Absolutbetrag der Stärke eines Magnetfeldes erfassen kann. Aufgrund der umfassenderen Information, die ein zur dreidimensionalen magnetischen Erfassung ausgebildeter Sensor bereitstellt, können mittels eines einzelnen solchen Sensors auch mehr als lediglich zwei Zustände (Vorliegen bzw. Nicht-Vorliegen einer bestimmten Stellung) des beweglichen Elements unterschieden und vorteilhafterweise auch räumliche Bewegungsverläufe nachvollzogen werden.

Diese Vorteile magnetischer Sensoren, die zur dreidimensionalen magnetischen Erfassung ausgebildet sind, sind aber nicht nur für eine besonders zuverlässige Erfassung der Stellung des erfassten beweglichen Elements nützlich, sondern tragen auch zur Verbesserung der Sicherheit des Schlosses vor Manipulationsversuchen bei, insbesondere vor Versuchen, das verriegelte Schloss in unbefugter und irregulärer Weise zu öffnen. Denn eine irreguläre Betätigung des Schlosses kann beispielsweise dazu führen, dass ein entlang einer definierten Bewegungsbahn bewegliches Element seine Bewegungsbahn verlässt und somit Stellungen einnimmt, die sich der Bewegungsbahn nicht zuordnen lassen. Anhand einer derartigen Abweichung, die bei Verwendung eines konventionellen Magnetschalters oder -sensors unerkannt bleibt, sich aber mittels eines zur dreidimensionalen magnetischen Erfassung ausgebildeten Sensors erfassen lässt, kann die irreguläre Betätigung dann festgestellt werden.

Aber auch wenn das bewegliche Element, dessen Stellung erfasst wird, die Bewegungsbahn nicht vollständig verlässt, kann ein Manipulationsversuch vorliegen, der sich mittels eines 3D-Magnetsensors feststellen lässt. Beispielsweise können mechanische Einwirkungen auf das Schloss, wie etwa ein Aufbruchsversuch, zu Erschütterungen führen, welche die Bewegung des beweglichen Elements entlang seiner Bewegungsbahn überlagern können. So kann die Bewegung dann z.B. ungewöhnliche Schwingungsanteile quer zur Bewegungsrichtung entlang der Bewegungsbahn aufweisen. Oder der Manipulationsversuch führt dazu, dass sich der zeitliche Verlauf, gemäß dem die Bewegungsbahn durchlaufen wird, verändert. Beispielsweise kann ein Aufbruchsversuch zur Folge haben, dass das bewegliche Element die Bewegungsbahn nicht wie üblich kontinuierlich durchläuft, sondern der Bewegungsverlauf, insbesondere ein Geschwindigkeitsverlauf der Bewegung, Verzögerungen, Beschleunigungen, Modulationen oder Unterbrechungen aufweist, die bei regulärer Betätigung nicht oder zumindest nicht an denjenigen Stellen, an denen sie auftreten, zu erwarten wären.

Neben der Feststellung solcher von der Erwartung abweichender Bewegungen oder Stellungen des beweglichen Elements kann ein 3D-Magnetsensor vorteilhafterweise auch, zusätzlich oder alternativ, dazu genutzt werden, Manipulationsversuche direkt anhand eines erfassten Magnetfeldes ohne Bezug zur Stellung des beweglichen Elements erfassen. Denn bei gewissen Manipulationsversuchen werden Magnete von außerhalb an das Schloss herangeführt, um mittels solcher externer Magnete Elemente des Schlosses zu bewegen, Magnetschalter zu schalten, Elektronik des Schlosses zu stören und/oder Steuerbefehle auszulösen, insbesondere um letztlich das Schloss in unbefugter Weise zu öffnen. Das von einem externen Magneten verursachte Magnetfeld kann aber mittels des zur dreidimensionalen magnetischen Erfassung ausgebildeten Sensors als eine Abweichung von den üblicherweise bei regulärer Betätigung des Schlosses vorliegenden Magnetfeldern erkannt werden, die auf einen Manipulationsversuch hindeutet. Denn anders als bei Magnetschaltern, die lediglich zwischen zwei Zuständen unterscheiden können, und bei eindimensionalen magnetischen Sensoren, die lediglich eine einzige Größe erfassen, z.B. lediglich einen Abstand oder lediglich die Stärke des Magnetfeldes, ermöglicht die dreidimensionale Erfassung das Magnetfeld eines externen Magneten von dem Magnetfeld des an dem beweglichen Element vorgesehenen Permanentmagneten zuverlässig zu unterscheiden.

Bei dem beweglichen Element, dessen Stellung entlang seiner definierten regulären Bewegungsbahn mittels des Sensors erfasst wird, kann es sich insbesondere um eines der folgenden Elemente eines jeweiligen Schlosses handeln: ein zwischen einer Offenstellung und einer Geschlossenstellung beweglicher Bügel; ein zwischen einer Verriegelungsstellung und einer Entriegelungsstellung beweglicher Riegel zum Verriegeln des Bügels in der Geschlossenstellung; ein Übertragungselement zur antriebswirksamen Kopplung des Riegels oder des Bügels mit einem Antriebsmotor des Schlosses; oder ein mit dem Riegel, dem Bügel oder dem Übertragungselement bewegungsgekoppeltes Kopplungselement. Bei dem Übertragungselement kann es sich beispielsweise um einen Exzenter handeln, welcher mit einer Abtriebswelle des Antriebsmotors antriebswirksam gekoppelt ist und je nach Drehstellung den Riegel versetzen kann, so dass die Stellung des Antriebsmotors und, soweit ein eindeutiger Zusammenhang zwischen Stellungen des Exzenters und Stellungen des Riegels besteht, auch die Stellung des Riegels indirekt anhand der Stellung des Exzenters erfasst werden können. Bei dem Kopplungselement kann es sich beispielsweise um einen schwenkbar gelagerten Hebel handeln, der einerseits z.B. mit dem Riegel bewegungsgekoppelt ist und andererseits den Permanentmagneten aufweist, mit dem der Sensor zusammenwirkt, so dass die Stellung des Riegel und, soweit ein eindeutiger Zusammenhang zwischen Stellungen des Riegels und Stellungen des Bügels besteht, auch die Stellung des Bügels indirekt anhand der Stellung des Hebels erfasst werden können.

Das Zweiradschloss kann ein tragbares Schloss sein oder an dem Zweirad fest montiert sein. Das Zweiradschloss kann insbesondere als ein Rahmenschloss ausgebildet sein. Ein derartiges Rahmenschloss kann beispielsweise einen Drehbügel (wie beispielsweise aus DE 10252080 A1 bekannt), einen Schwenkbügel (wie beispielsweise aus DE 102011015313 A1 bekannt) oder einen linear verfahrbaren Bügel (wie beispielsweise aus DE 102012002903 A1 bekannt) aufweisen. Alternativ hierzu kann das Zweiradschloss als ein U-Bügel-Schloss (wie beispielsweise aus DE 100 26 701 A1 oder DE 10 2007 035 122 A1 bekannt), als ein Faltschloss mit Gelenkstab (wie beispielsweise aus DE 102005040066 A1 bekannt), als ein Bremsscheibenschloss (wie beispielsweise aus DE 102005043927 A1 bekannt) ausgebildet sein.

Gemäß einer vorteilhaften Ausführungsform ist der magnetische Sensor als 3D-Magnetfeldsensor oder als 3D-Hall-Sensor ausgebildet. Herkömmliche Magnetsensoren erfassen das Magnetfeld in eine einzige Richtung, die durch die Lage des Sensors vorgegeben ist. Dagegen kann mittels eines 3D-Magnetfeldsensors, insbesondere mittels eines 3D-Hall-Sensors, das Magnetfeld vorteilhafterweise in drei Raumrichtungen erfasst werden. Da die Bewegung eines Permanentmagneten stets zu einer Änderung des Magnetfeldes in zumindest einer Raumrichtung führt, kann auf diese Weise insbesondere die Position eines Permanentmagneten im Raum dreidimensional erfasst und dessen Bewegung im Raum nachvollzogen werden.

Gemäß einer weiteren vorteilhaften Ausführungsform ist das bewegliche Element derart gelagert, dass es einen einzigen Freiheitsgrad aufweist. Mit anderen Worten kann sich das Element zumindest bei regulärer Nutzung des Schlosses ausschließlich (von möglichem geringfügigen Spiel abgesehen) auf seiner definierten Bewegungsbahn bewegen, die insbesondere keine Verzweigungen aufweist. Die definierte Bewegungsbahn, entlang der sich das Element bewegen kann, kann etwa einer kontinuierlichen Linie im Raum entsprechen. Bei dem Freiheitsgrad kann es sich z.B. um einen rein translatorischen, um einen rein rotatorischen oder um einen kombiniert translatorischen und rotatorischen Freiheitsgrad handeln. Beispielsweise kann vorgesehen sein, dass der genannte Exzenter bzw. ein daran vorgesehener Permanentmagnet einen rein rotatorischen Freiheitsgrad aufweist. Bei einem schwenkbar gelagerten und mit dem Riegel des Schlosses bewegungsgekoppelten Hebel kann ein an einem Ende des Hebels angeordneter Permanentmagnet eine Teilkreisbogenbahn durchlaufen und insofern einen kombiniert translatorischen und rotatorischen Freiheitsgrad aufweisen. Die Beschränkung der Beweglichkeit des beweglichen Elements auf einen einzigen Freiheitsgrad (zumindest bei regulärer Benutzung) vereinfacht die Erkennung irregulärer Zustände, da durch diese Beschränkung eine Vielzahl von Stellungen des Permanentmagneten bzw. eine Vielzahl von Zuständen des Magnetfeldes ausgeschlossen werden, so dass, wenn mittels des Sensor erfasst wird, dass einer der eigentlich ausgeschlossenen Zustände dennoch vorliegt, auf einen Manipulationsversuch geschlossen werden kann.

Des Weiteren ist es vorteilhaft, wenn das Schloss gemäß einer weiteren Ausführungsform eine Auswertevorrichtung umfasst, die dazu ausgebildet ist, einen mittels des Sensors erfassten magnetischen Messwert im Hinblick auf eine Übereinstimmung mit einem für eine der Stellungen des beweglichen Elements entlang der definierten Bewegungsbahn zu erwartenden Messwert auszuwerten. Ein Messwert ist insbesondere dann nicht zu erwarten, wenn er keiner der Stellungen des beweglichen Elements entlang der definierten Bewegungsbahn entspricht. Der Messwert kann aber auch dann nicht zu erwarten sein, wenn es zwar eine Stellung entlang der definierten Bewegungsbahn gibt, welche dem erfassten Messwert zugrundeliegen könnte, diese Stellung aber im derzeitigen Zustand des Schlosses nicht vorliegen dürfte. Z.B. wenn der Riegel in eine den Bügel sperrende Verriegelungsstellung vorgespannt ist und bekannt ist oder erfasst wird, dass der Bügel geschlossen ist und dass der Antriebsmotor und der Exzenter den Riegel derzeit nicht entgegen der Vorspannung versetzen oder halten, so ist zu erwarten, dass sich der Riegel aufgrund der Vorspannung in seiner Verriegelungsstellung befindet. Ein erfasster Messwert, welcher der Entriegelungsstellung des Riegels entspricht, entspricht dann zwar grundsätzlich einer regulären Riegelstellung, stellt dann aber dennoch eine Abweichung von dem aktuell zu erwartenden Messwert dar.

Auch wenn an dem Schloss ein Manipulationsversuch mittels eines externen Magneten erfolgt, wird dieser in der Regel dazu führen, dass mittels des zu dreidimensionaler magnetischer Erfassung ausgebildeten Sensors ein Messwert erfasst wird, der von allen einer Stellung des beweglichen Elements entlang dessen definierter Bewegungsbahn entsprechenden Messwerten abweicht, zumindest aber von demjenigen Messwert abweicht, der für die tatsächliche Stellung des beweglichen Elements aktuell zu erwarten wäre. Anhand der dann folglich fehlenden Übereinstimmung des erfassten magnetischen Messwerts mit einem zu erwartenden Messwert kann die Auswertevorrichtung somit vorteilhafterweise das Vorliegen eines Manipulationsversuchs feststellen.

Gemäß einer weiteren vorteilhaften Ausführungsform umfasst das Schloss ferner eine Alarmvorrichtung zum Ausgeben eines Alarms, wobei die Auswertevorrichtung dazu ausgebildet ist, die Alarmvorrichtung dazu anzusteuern, einen Alarm auszugeben, wenn bei einer Auswertung eines erfassten Messwerts keine Übereinstimmung mit einem für eine der Stellungen des beweglichen Elements entlang der definierten Bewegungsbahn zu erwartenden Messwert festgestellt wird. Somit kann das Feststellen eines Manipulationsversuchs durch die Auswertevorrichtung auch zu einer Reaktion führen, durch die dem Manipulationsversuch entgegengewirkt werden kann. Der Alarm kann ein akustisches und/oder ein optisches Alarmsignal umfassen, das von dem Schloss ausgegeben wird, etwa um denjenigen, der den Manipulationsversuch unternimmt, abzuschrecken und/oder Personen im Umfeld des Schlosses auf den Manipulationsversuch aufmerksam zu machen. Der Alarm kann auch ein Funksignal umfassen, über das die Feststellung eines Manipulationsversuchs über eine gewisse Distanz hinweg, insbesondere dem Besitzer des Schlosses, gemeldet werden kann. Zudem kann vorgesehen sein, dass durch den ausgesendeten Alarm eine interne Reaktion des Schlosses auf den Manipulationsversuch ausgelöst wird. Beispielsweise können daraufhin erweiterte Schutzmechanismen des Schlosses aktiviert werden.

Das erfindungsgemäße Verfahren ist dazu ausgebildet, Manipulationsversuche an einem Zweiradschloss, insbesondere einem Rahmenschloss, zu detektieren, wobei das Schloss, das vorzugsweise zumindest teilweise motorisch antreibbar ist und bevorzugt gemäß einer der vorstehend beschriebenen Ausführungsformen ausgebildet ist, einen Sensor zum dreidimensionalen magnetischen Erfassen verschiedener Stellungen eines entlang einer definierten Bewegungsbahn beweglichen Elements des Schlosses aufweist. Das Verfahren umfasst die Schritte: Erfassen eines magnetischen Messwerts mittels des Sensors; Auswerten des erfassten Messwerts im Hinblick auf eine Übereinstimmung mit einem für eine der Stellungen des beweglichen Elements entlang der definierten Bewegungsbahn zu erwartenden Messwert; Zuordnen einer jeweiligen Stellung des beweglichen Elements zu dem Messwert, falls eine Übereinstimmung vorliegt; andernfalls Feststellen eines Manipulationsversuchs.

Das Verfahren weist somit wesentliche Übereinstimmungen mit den vorstehend beschriebenen Verwendungsmöglichkeiten des erfindungsgemäßen Zweiradschlosses auf. Insofern gelten die dort beschriebenen Möglichkeiten der Ausbildung sowie der Nutzung des Schlosses und deren jeweilige Vorteile in entsprechender Weise auch für das Verfahren. Insbesondere wird gemäß dem Verfahren ein erfasster Messwert, beispielsweise mittels der genannten Auswertevorrichtung, ausgewertet, indem geprüft wird, ob eine Übereinstimmung des erfassten Messwerts mit einem zu erwartenden Messwert vorliegt. Dabei ist ein Messwert insbesondere dann nicht zu erwarten, wenn er sich nicht aus einer Stellung des beweglichen Elements entlang dessen definierter Bewegungsbahn ergibt.

Es kann vorgesehen sein, dass ein Datensatz gespeicherter möglicher Messwerte, die verschiedenen Stellungen des beweglichen Elements entlang seiner Bewegungsbahn entsprechen, vorliegt, so dass für die Auswertung geprüft werden kann, ob der erfasste Messwert mit einem der Messwerte des Datensatzes übereinstimmt. Ein derartiger Datensatz kann beispielsweise durch Bewegen des Elements entlang dessen definierter regulärer Bewegungsbahn und Erfassen der entsprechenden Messwerte mittels des Sensors in Sinne eines zumindest einmaligen Einlernens ermittelt und gespeichert werden. Das genannte Zuordnen einer jeweiligen Stellung zu dem erfassten Messwert kann dann dadurch erfolgen, dass dem erfassten Messwert diejenige Stellung zugeordnet wird, die demjenigen gespeicherten Messwert zugrundeliegt, der mit dem erfassten Messwert übereinstimmt. Die Auswertung und/oder Zuordnung kann aber auch rechnerisch, etwa auf Grundlage des erfassten Messwerts und der bekannten Bewegungsbahn des Elements anhand geometrischer und/oder physikalischer Zusammenhänge, erfolgen.

Wenn die Auswertung ergibt, dass eine Übereinstimmung des erfassten Messwerts mit einem zu erwartenden Messwert vorliegt, wird dem erfassten Messwert die entsprechende Stellung des beweglichen Elements zugeordnet, so dass diese ausgeben und genutzt werden kann. Beispielsweise kann die so ermittelte Stellung der Überwachung des jeweiligen Zustands des Schlosses dienen. Zudem kann die ermittelte Stellung als Feedback im Rahmen einer geregelten Ansteuerung eines Antriebsmotors des Schlosses genutzt werden. Die aktuell vorliegende Stellung kann auch dazu herangezogen werden, zu bestimmen, welche Stellungen ausgehend von dieser Stellung als nächstes vorliegen können und somit was für Messwerte des magnetischen Sensors als nächstes zu erwarten sind.

Ergibt die Auswertung dagegen, dass keine Übereinstimmung vorliegt, wird dies als Hinweis auf das Vorliegen eines Manipulationsversuchs gewertet. Gemäß einer vorteilhaften Ausführungsform des Verfahrens ist vorgesehen, dass in diesem Fall ein Alarm ausgegeben wird. Dieser Alarm kann wie vorstehend beschrieben dazu dienen, z.B. in Form eines akustischen und/oder optischen Alarmsignals auf den Manipulationsversuch aufmerksam zu machen und denjenigen, der den Manipulationsversuch unternimmt, abzuschrecken, und/oder dazu dienen, eine Gegenmaßnahme gegen den Manipulationsversuch auszulösen. Vorzugsweise wird der Alarm dabei nach außerhalb des Schlosses ausgegeben. Grundsätzlich kann der Alarm aber auch lediglich intern ausgegeben werden und im Schloss dann vorzugsweise eine Gegenmaßnahme auslösen.

Die Erfindung bezieht sich ferner auf die Verwendung eines zum dreidimensionalen magnetischen Erfassen ausgebildeten Sensors in einem Zweiradschloss, insbesondere einem Rahmenschloss, wobei das Schloss vorzugsweise zumindest teilweise motorisch antreibbar ist, und wobei der Sensor verschiedene Stellungen eines entlang einer definierten Bewegungsbahn beweglichen Elements des Schlosses erfasst, zur Detektion von Manipulationsversuchen anhand einer Abweichung eines mittels des Sensors erfassten Messwerts von einem für eine der Stellungen des beweglichen Elements entlang der definierten Bewegungsbahn zu erwartenden Messwert. Die Detektion kann dabei insbesondere auf eine der vorstehend beschriebenen Weisen erfolgen und insbesondere auf eines der vorstehend beschriebenen Schlösser angewandt werden.

Die Erfindung wird nachfolgend lediglich beispielhaft unter Bezugnahme auf die Figuren weiter erläutert.
- Fig. 1 und 2: zeigen in einer perspektivischen schematischen Darstellung Teile einer Ausführungsform des erfindungsgemäßen Zweiradschlosses aus unterschiedlichen Blickwinkeln, wobei sich ein Bügel des Schlosses in einer Geschlossenstellung befindet und sich ein Riegel des Schlosses in einer Verriegelungsstellung befindet.
- Fig. 3 und 4: entsprechen weitgehend den Fig. 1 und 2, wobei jedoch der Bügel eine Zwischenstellung einnimmt und sich der Riegel in einer Entriegelungsstellung befindet.
- Fig. 5 und 6: entsprechend weitgehend den Fig. 1 und 2, wobei sich jedoch der Bügel in einer Offenstellung befindet und sich der Riegel in einer Sicherungsstellung befindet.

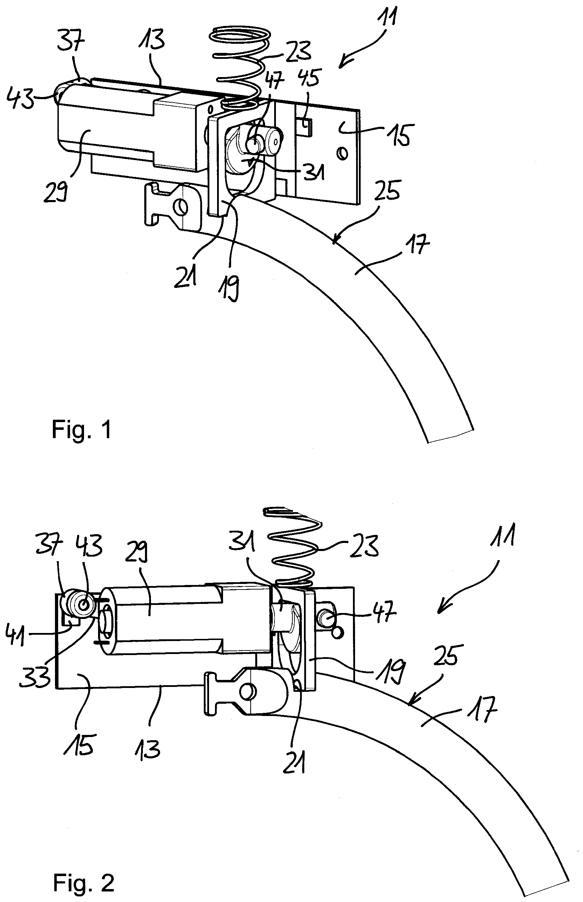

Die Fig. 1 bis 6 zeigen eine Ausführungsform eines erfindungsgemäßen Zweiradschlosses. Bei dieser Ausführungsform handelt es sich um ein teilautomatisches Rahmenschloss 11. Das Rahmenschloss 11 umfasst einen Schlosskörper 13, von dem in den Figuren lediglich eine einen Innenraum des Schlosskörpers 13 begrenzende Platte 15 gezeigt ist.

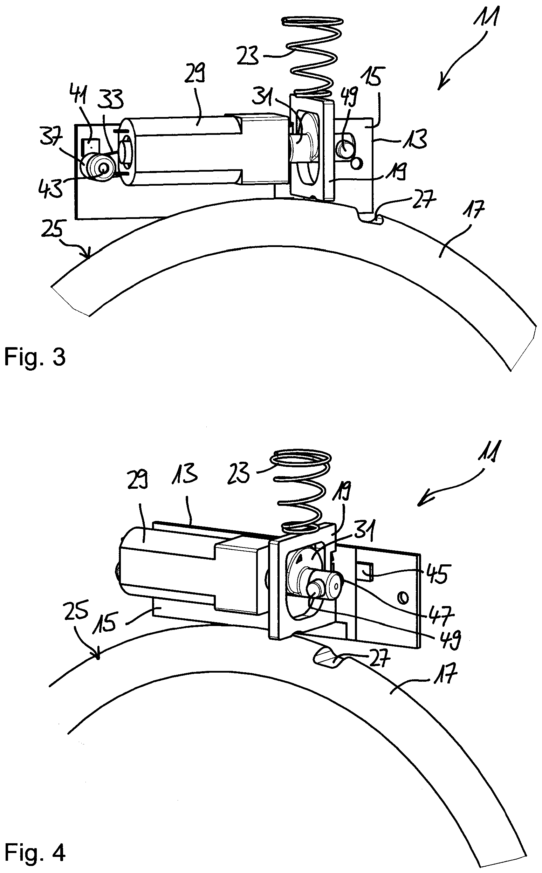

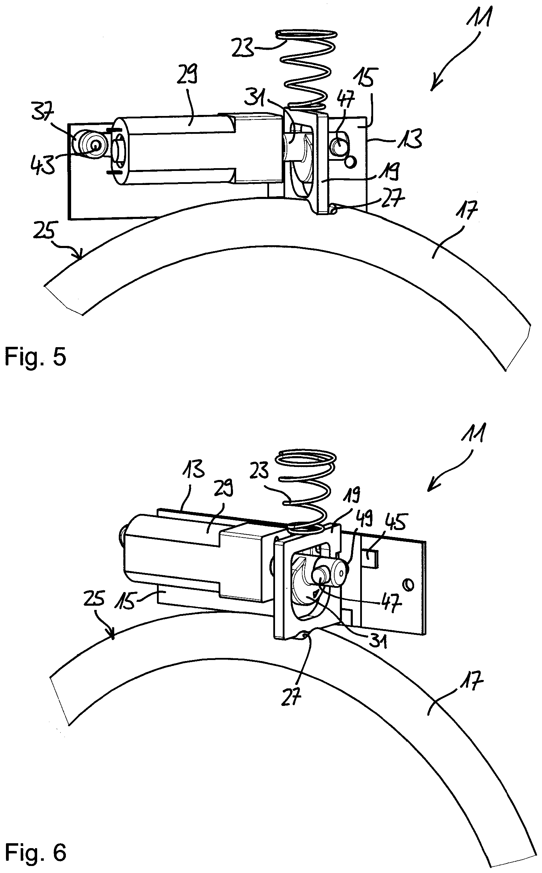

Das Rahmenschloss 11 umfasst ferner einen teilkreisbogenförmigen Bügel 17, der jeweils nur teilweise gezeigt ist und der zwischen der in den Fig. 1 und 2 gezeigten Geschlossenstellung und der in den Fig. 5 und 6 gezeigten Offenstellung beweglich ist. In dem in den Fig. 3 und 4 gezeigten Zustand des Schlosses befindet sich der Bügel 17 in einer Zwischenstellung zwischen der Geschlossenstellung und der Offenstellung. Der Bügel 17 wird durch den Schlosskörper 13 auf einer Kreisbahn geführt, entlang der sich auch die Teilkreisbogenform des Bügels 17 erstreckt. Das Rahmenschloss 11 ist dazu ausgebildet, derart an einem Rad eines Zweirades angeordnet zu werden, dass der Bügel 17 in der Geschlossenstellung zwischen Speichen des Rades greift und es dadurch blockiert, in der Offenstellung dagegen das Rad freigibt. Dabei kann der Bügel 17 in die Offenstellung vorgespannt sein.

Die grundsätzliche Beweglichkeit des Bügels 17 wird durch einen Riegel 19 des Schlosses 11 eingeschränkt, der im Wesentlichen radial zur Teilkreisbogenform des Bügels 17 beweglich an dem Schlosskörper 13 gelagert ist. Dabei kann der Riegel 19, wenn sich der Bügel 17 in seiner Geschlossenstellung befindet, in eine erste Eingriffsvertiefung 21 des Bügels 17 eingreifen, die sich radial von außen in den Bügel 17 erstreckt. In diesem Zustand, der in den Fig. 1 und 2 gezeigt ist, sperrt der Riegel 19 durch das Eingreifen in die erste Eingriffsvertiefung 21 den Bügel 17 gegen ein Verlassen der Geschlossenstellung und befindet sich insofern in seiner Verriegelungsstellung.

Aus dieser Verriegelungsstellung kann der Riegel 19 radial nach außen versetzt werden, so dass er aus der ersten Eingriffsvertiefung 21 austritt und radial außerhalb des Außenradius des Bügels 17 angeordnet ist. Dadurch wird der Bügel 17 für ein Verlassen der Geschlossenstellung freigegeben, so dass sich der Riegel 19 insofern in seiner Entriegelungsstellung befindet. Die Entriegelungsstellung ist dabei nicht unbedingt auf eine einzige Stellung des Riegels 19 beschränkt, sondern kann den gesamten Bereich von Riegelstellungen umfassen, in denen der Bügel 17 für ein Bewegen von der Geschlossenstellung in die Offenstellung und zurück freigegeben ist. Die Entriegelungsstellung des Riegels 19 ist beispielsweise in den Fig. 3 und 4 gezeigt.

Des Weiteren umfasst das Schloss eine Feder 23, die den Riegel 19 beaufschlagt und dadurch gegen den Bügel 17 vorspannt. Solange der Riegel 19 nicht entgegen dieser Vorspannung bewegt oder gehalten wird, liegt der Riegel 19 daher an einer äußeren Kontur 25 des Bügels 17 an. Wo entlang dieser Kontur 25 der Riegel 19 jeweils anliegt, hängt dabei von der jeweiligen Stellung des Bügels 17 ab. Die erste Eingriffsvertiefung 21 bildet dabei denjenigen Teil der Kontur 25, gegen den der Riegel 19 in der Geschlossenstellung des Bügels 17 anliegt. In einem Bereich, der sich an die erste Eingriffsvertiefung 21 anschließt, weist die Kontur 25 einen im Wesentlichen konstanten Radius auf, der dem Außenradius des Bügels 17 entspricht. An diesem Bereich liegt der Riegel 19 in Zwischenstellungen des Bügels 17 zwischen dessen Geschlossenstellung und Offenstellung aufgrund der Vorspannung an und nimmt dadurch im Wesentlichen die in den Fig. 3 und 4 gezeigte Entriegelungsstellung ein. In der Entriegelungsstellung des Riegels 19 kann der Bügel 17 geöffnet oder geschlossen werden, wobei der Riegel 19, solange er nicht wie in den Fig. 3 und 4 gezeigt durch den Exzenter 31 entgegen der Vorspannung der Feder 23 in einem Abstand zur Kontur 25 gehalten wird, an der Kontur 25 des Bügels 17 entlanggleitet.

Die Kontur 25 erstreckt sich von der ersten Eingriffsvertiefung 21 über den Bereich mit konstantem Radius bis zu einer zweiten Eingriffsvertiefung 27, die sich radial von außen in den Bügel 17 erstreckt und in die der Riegel 19 aufgrund der Vorspannung der Feder 23 eingreift, wenn sich der Bügel 17 in der Offenstellung befindet. Gegenüber dem Bereich der Kontur 25 mit konstantem Radius weist die zweite Eingriffsvertiefung 27 eine geringere Tiefe auf als die erste Eingriffsvertiefung 21. Dadurch unterscheidet sich die in den Fig. 5 und 6 gezeigte Stellung des in die zweite Eingriffsvertiefung 27 eingreifenden Riegels 19 von der Verriegelungsstellung, in der er sich befindet, wenn er in die erste Eingriffsvertiefung 21 eingreift. Durch das Eingreifen des Riegels 19 in die zweite Eingriffsvertiefung 27 wird der Bügel 17 an einem Verlassen seiner Öffnungsstellung gehindert, so dass der Bügel 17 gegen ein Schließen gesichert ist. Die in den Fig. 5 und 6 gezeigte Riegelstellung stellt insofern eine von der Verriegelungsstellung und der Entriegelungsstellung zu unterscheidende Sicherungsstellung des Riegels 19 dar.

Entgegen der Vorspannung der Feder 23 kann der Riegel 19 bezüglich der Teilkreisbogenform des Bügels 17 radial nach außen motorisch versetzt werden. Dazu ist ein Antriebsmotor 29 vorgesehen, der bei der gezeigten beispielhaften Ausführungsform als Elektromotor ausgebildet ist. Eine Abtriebswelle des Antriebsmotors 29 treibt einen Exzenter 31 an, der in eine Öffnung des im Wesentlichen scheibenförmigen Riegels 19 eingreift, so dass der Riegel 19 je nach Drehstellung des Exzenters 31 gegen die Vorspannung radial nach außen versetzt und grundsätzlich auch in einer bestimmten Stellung gehalten werden kann. Der Antriebsmotor 29 wird jedoch lediglich dazu genutzt, den Bügel 17 für ein Verlassen der Geschlossenstellung (Fig. 1 und 2) bzw. der Offenstellung (Fig. 5 und 6) freizugeben, indem der Riegel 19 kurzzeitig aus seiner Verriegelungsstellung (Fig. 1 und 2) bzw. seiner Sicherungsstellung (Fig. 5 und 6) radial nach außen versetzt wird, so dass der Eingriff des Riegels 19 in die erste Eingriffsvertiefung 21 bzw. in die zweite Eingriffsvertiefung 27 aufgehoben wird. Sobald sich der Bügel 17 daraufhin aus der Geschlossenstellung bzw. Offenstellung bewegt hat, kann der Antriebsmotor 29 deaktiviert werden, so dass der Riegel 19 wieder durch die Vorspannung der Feder 23 gegen den Bügel 17 gedrängt wird und an dem Bereich der Kontur 25 mit konstantem Radius anliegt. Der Bügel 17 ist dadurch für ein Bewegen zwischen seiner Geschlossenstellung und seiner Offenstellung freigegeben.

Da der Riegel 19 infolge der Vorspannung an der Kontur 25 anliegt, solange er nicht vorübergehend entgegen der Vorspannung versetzt oder gehalten wird, lässt sich anhand der jeweiligen Stellung des Riegels 19 auch der Zustand des Bügels 17 feststellen. Befindet sich der Riegel 19 in der Verriegelungsstellung, kann der Bügel 17 nur in der Geschlossenstellung sein. In entsprechender Weise kann der Bügel 17 nur in der Offenstellung sein, wenn sich der Riegel 19 in der Sicherungsstellung befindet. Befindet sich der Riegel 19 dagegen in der Entriegelungsstellung, insbesondere in der Stellung, in der er an dem Bereich der Kontur 25 mit konstantem Radius anliegt, so befindet sich der Bügel 17 in einer Zwischenstellung zwischen der Offenstellung und der Geschlossenstellung.

Welche Stellung des Riegels 19 und des Exzenters 31 jeweils vorliegt, wird mittels zweier magnetischer Sensoren 41, 45 erfasst. Dabei wirkt der Sensor 41, mittels dessen die Riegelstellung erfasst wird, nicht direkt mit dem Riegel 19 bzw. einem daran angeordneten Permanentmagneten zusammen, sondern mit einem Permanentmagneten 43, der an einem um einen Drehpunkt schwenkbar hinter dem Antriebsmotor 29 an dem Schlosskörper 13 gelagerten Hebel 33 vorgesehen ist (vgl. insbesondere Fig. 3). Der Hebel 33 ist als flacher gerader Stab ausgebildet, der im Wesentlichen parallel zum Antriebsmotor 29 angeordnet ist und dessen Enden einen Kopplungsabschnitt (in den Figuren vom Antriebsmotor 29 verdeckt) bzw. einen Auslenkabschnitt 37 bilden. Über den Kopplungsabschnitt ist der Hebel 33 mit dem Riegel 19 bewegungsgekoppelt, so dass bei einem Versetzen des Riegels 19 der Hebel 33 um den Drehpunkt verschwenkt wird. Die Bewegungskopplung des Hebels 33 mit dem Riegel 19 erfolgt dabei dadurch, dass der Kopplungsabschnitt in eine Aussparung des Riegels 19 eingreift.

Da der Kopplungsabschnitt an einem ersten Ende des Hebels 33 vorgesehen ist und der Auslenkabschnitt 37 an einem dem ersten Enden entgegengesetzten zweiten Ende des Hebels 33 in etwa doppelt so großem Abstand von dem Drehpunkt vorgesehen ist wie der Kopplungsabschnitt, führt der Auslenkabschnitt 37 bei einer Bewegung des Kopplungsabschnitts eine im Vergleich dazu etwa doppelt so große Bewegung aus. Auf diese Weise unterscheiden sich die Stellungen des den Auslenkabschnitt 37 definierenden Permanentmagneten 43, die der Verriegelungsstellung, der Entriegelungsstellung und der Sicherungsstellung des Riegels 19 entsprechen, stärker voneinander, als sich diese Riegelstellungen selbst voneinander unterscheiden, und können dadurch zuverlässiger mittels des Sensors 41 erfasst werden.

Bei dem Sensor 41 handelt es sich um einen magnetischen Sensor, der zur dreidimensionalen magnetischen Erfassung ausgebildet ist, beispielsweise um einen 3D-Magnetfeldsensor, insbesondere um einen 3D-Hall-Sensor. Somit kann der Sensor 41 das Magnetfeld des Permanentmagneten 43 und dadurch dessen Lage im Raum präzise erfassen. Auf diese Weise können die drei Stellungen des Auslenkabschnitts 37 des Hebels 33, die aufgrund der Bewegungskopplung des Kopplungsabschnitts des Hebels 33 mit dem Riegel 19 der Verriegelungsstellung, der Entriegelungsstellung und der Sicherungsstellung des Riegels 19 entsprechen, mittels eines einzelnen Sensors 41 zuverlässig unterschieden werden.

Das Schloss 11 weist ferner einen weiteren magnetischen Sensor 45 auf, der ebenfalls zur dreidimensionalen magnetischen Erfassung ausgebildet ist und bei dem es sich ebenfalls beispielsweise um einen 3D-Magnetfeldsensor, insbesondere um einen 3D-Hall-Sensor, handelt. Dieser Sensor 45 wirkt mit einem am Exzenter 31 vorgesehenen Permanentmagneten zusammen, der sich gemeinsam mit dem Exzenter 31 dreht und durch zwei einzelne Permanentmagnete 47, 49 gebildet wird. Die beiden einzelnen Permanentmagnete 47, 49 sind koaxial zueinander ausgerichtet, so dass ihre magnetischen Nord- und Südpole auf einer Geraden liegen und entlang der Geraden einander abwechseln. Mit anderen Worten sind die beiden Permanentmagnete 47, 49 bezüglich ihrer Polung identisch zueinander ausgerichtet, ziehen sich daher gegenseitig entlang ihrer gemeinsamen Längserstreckung entlang der genannten Gerade an und können gemeinsam als ein einzelner durchgehenden Permanentmagnet betrachtet werden, dessen Pole bezüglich der Drehachse des Exzenters 31 in zueinander entgegengesetzter Richtung radial ausgerichtet sind.

Die gegenseitige magnetische Anziehung der beiden Permanentmagnete 47, 49 kann auch für deren Befestigung an dem Exzenter 31 genutzt werden. Dazu kann der Exzenter 31 zwei koaxiale, radial entgegengesetzt ausgerichtete Aufnahmen, insbesondere in Form einer jeweiligen Bohrung, aufweisen, die lediglich durch eine dünne Wand getrennt sind oder sogar verbunden sind, so dass sie einen durchgehenden Kanal bilden, wobei dann in dem Kanal beim Übergang zwischen den beiden Aufnahmen eine Durchmesserverringerung vorgesehen ist. Die Permanentmagnete 47, 49 können dann von entgegengesetzten Seiten mit unterschiedlichen Polen aufeinander zu weisend in eine jeweilige der Aufnahmen eingesetzt sein, so dass sie sich gegenseitig bis gegen die Wand bzw. die Durchmesserverringerung ziehen und somit zuverlässig positioniert stabil in den Aufnahmen halten.

In den Fig. 1 und 2 sowie 5 und 6 ist eine Neutralstellung des Exzenters 31 gezeigt, in der der Exzenter 31 der von der Feder 23 bewirkten Vorspannung nicht entgegenwirkt, so dass der Riegel 19 an der Kontur 25 des Bügels 17 anliegt, insbesondere je nach Stellung des Bügels 17 in eine der Eingriffsvertiefungen 21, 27 eingreift. In dieser Neutralstellung ist der eine Permanentmagnet 47 der beiden Permanentmagnete 47, 49, die gemeinsam den am Exzenter 31 angeordneten Permanentmagneten bilden, mit seinem einen Pol in Richtung auf den weiteren magnetischen Sensor 45 zu ausgerichtet, während der andere Permanentmagnet 49 mit dem entgegensetzten Pol von dem Sensor 45 weg weist.

Dagegen ist in den Fig. 3 und 4 eine Entsperrstellung des Exzenters 31 gezeigt, in der der Exzenter 31 gegenüber der Neutralstellung um 180° gedreht ist. In der Entsperrstellung drängt der Exzenter 31 den Riegel 19 entgegen der Vorspannung der Feder 23 von dem Bügel 17 weg, so dass der Riegel 19 zumindest vorübergehend nicht an der Kontur 25 des Bügels 17 anliegt. Sofern der Riegel 19 zuvor in eine der Eingriffsvertiefungen 21, 27 eingegriffen hat, wird er dadurch aus der jeweiligen Eingriffsvertiefung 21, 27 herausbewegt, so dass der Bügel 17 für ein Bewegen aus der Geschlossenstellung in die Offenstellung bzw. umgekehrt freigegeben ist. Insofern wird durch Drehen des Exzenters 31 in die Entsperrstellung der Riegel 19 in seine Entriegelungsstellung versetzt. Infolge der halben Drehung des Exzenters 31 ist in dessen Entsperrstellung nicht mehr der eine Permanentmagnet 47, sondern der andere Permanentmagnet 49 in Richtung auf den weiteren magnetischen Sensor 45 zu ausgerichtet, so dass sich das von den Permanentmagneten 47, 49 erzeugte Magnetfeld gerade umgepolt hat. Anhand der jeweiligen Polung des von den beiden Permanentmagneten 47, 49 erzeugten Magnetfeldes können daher die Neutralstellung und die Entsperrstellung des Exzenters 31 mittels des Sensors 45 erfasst und zuverlässig voneinander unterschieden werden.

Da die Sensoren 41, 45 zur dreidimensionalen magnetischen Erfassung ausgebildet sind, lassen sich nicht nur zwei oder drei einzelne Stellungen erfassen, sondern der gesamte jeweilige Bewegungsverlauf des am Auslenkabschnitt 37 des Hebels 33 angeordneten Permanentmagneten 43 bzw. des durch die zwei Permanentmagneten 47, 49 gebildeten und am Exzenter 31 angeordneten Permanentmagneten nachvollziehen. Die Bewegungsbahnen, auf denen sich die Permanentmagneten 43 bzw. 47 und 49 bewegen, sind dabei eindeutig definiert, ändern sich nicht und können nicht verlassen werden, sondern nur in eine Richtung sowie in die dazu entgegengesetzte Richtung durchlaufen werden. Daher sind als Messwerte, die mittels der Sensoren 41, 45 erfasst werden, auch nur solche Messwerte zu erwarten, die einem Magnetfeld entsprechen, das sich aus einer Stellung des jeweiligen Permanentmagneten 43, 47 bzw. 49 entlang der jeweiligen definierten Bewegungsbahn ergibt. Mittels der 3D-Magnetsensoren 41, 45 können aber auch Abweichungen von diesen zu erwartenden Messwerten festgestellt werden. Derartige Abweichungen können ein Hinweis darauf sein, dass ein Permanentmagnet 43, 47, 49 bzw. das bewegliche Element, an dem er angeordnet ist, eine irreguläre Bewegungsbahn durchläuft oder dass von außerhalb des Schlosses 11 ein bei regulärer Benutzung des Schlosses 11 nicht vorgesehenes Magnetfeld auf das Schloss 11 einwirkt. Daher lässt sich aus solchen Abweichungen darauf schließen, dass ein Manipulationsversuch vorliegt.

Durch Sensoren 41, 45, die zur dreidimensionalen magnetischen Erfassung ausgebildet sind und zum Erfassen verschiedener Stellungen eines entlang einer definierten Bewegungsbahn beweglichen Elements eines Schlosses 11 genutzt werden, können daher von der definierten Bewegungsbahn abweichende Stellungen oder Bewegungen des beweglichen Elements und/oder mittels externer Magnete vorgenommene Manipulationsversuche festgestellt werden. Dies ermöglicht es insbesondere, derartige Manipulationsversuche aufzudecken und nach Möglichkeit zu vereiteln. Dazu sind die Sensoren 41, 45 mit einer nicht dargestellten Auswertevorrichtung verbunden, welche von den Sensoren 41, 45 Messwerte empfängt und auswertet. Lässt sich keine Übereinstimmung der erfassten Messwerte mit zu erwartenden Messwerten feststellen, so steuert die Auswertevorrichtung eine ebenfalls nicht dargestellte Alarmvorrichtung dazu an, einen Alarm auszugeben, der auf den Manipulationsversuch aufmerksam machen und/oder Gegenmaßnahmen auslösen kann. Durch eine derartige Ausbildung weist das Schloss 11 eine vergleichsweise wesentlich verbesserte Sicherheit gegenüber Manipulationsversuchen auf.

### Bezugszeichen

- 11: Rahmenschloss
- 13: Schlosskörper
- 15: Platte
- 17: Bügel
- 19: Riegel
- 21: erste Eingriffsvertiefung
- 23: Feder
- 25: Kontur
- 27: zweite Eingriffsvertiefung
- 29: Antriebsmotor
- 31: Exzenter
- 33: Hebel
- 37: Auslenkabschnitt
- 41: Sensor
- 43: Permanentmagnet
- 45: Sensor
- 47: Permanentmagnet
- 49: Permanentmagnet

## Patentansprüche

1. Zweiradschloss, insbesondere Rahmenschloss (11), vorzugsweise zumindest teilweise motorisch antreibbar,
mit einem Sensor (41, 45) zum Erfassen verschiedener Stellungen eines entlang einer definierten Bewegungsbahn beweglichen Elements des Schlosses,
wobei das bewegliche Element einen Permanentmagneten (43, 47, 49) aufweist und der Sensor (41, 45) als magnetischer Sensor ausgebildet ist, **dadurch gekennzeichnet,**
**dass** der magnetische Sensor (41, 45) zur dreidimensionalen magnetischen Erfassung ausgebildet ist, um von der definierten Bewegungsbahn abweichende Stellungen oder Bewegungen des beweglichen Elements und/oder mittels externer Magnete vorgenommene Manipulationsversuche zu erfassen.

2. Zweiradschloss nach Anspruch 1,
wobei es sich bei dem beweglichen Element um
- einen zwischen einer Offenstellung und einer Geschlossenstellung beweglichen Bügel (17),
- einen zwischen einer Verriegelungsstellung und einer Entriegelungsstellung beweglichen Riegel (19) zum Verriegeln des Bügels (17) in der Geschlossenstellung,
- ein Übertragungselement (31) zur antriebswirksamen Kopplung des Riegels (19) oder des Bügels (17) mit einem Antriebsmotor (29) des Schlosses oder
- ein mit dem Riegel (19), dem Bügel (17) oder dem Übertragungselement (31) bewegungsgekoppeltes Kopplungselement (33) handelt.

3. Zweiradschloss nach Anspruch 1 oder 2,
wobei der magnetische Sensor (41, 45) als 3D-Magnetfeldsensor oder 3D-Hall-Sensor ausgebildet ist.

4. Zweiradschloss nach zumindest einem der vorstehenden Ansprüche,
wobei das bewegliche Element derart gelagert ist, dass es einen einzigen Freiheitsgrad aufweist.

5. Zweiradschloss nach zumindest einem der vorstehenden Ansprüche, ferner mit einer Auswertevorrichtung, die dazu ausgebildet ist, einen mittels des Sensors (41, 45) erfassten magnetischen Messwert im Hinblick auf eine Übereinstimmung mit einem für eine der Stellungen des beweglichen Elements entlang der definierten Bewegungsbahn zu erwartenden Messwert auszuwerten.

6. Zweiradschloss nach Anspruch 5,
ferner mit einer Alarmvorrichtung zum Ausgeben eines Alarms, wobei die Auswertevorrichtung dazu ausgebildet ist, die Alarmvorrichtung dazu anzusteuern, einen Alarm auszugeben, wenn bei einer Auswertung eines erfassten Messwerts keine Übereinstimmung mit einem für eine der Stellungen des beweglichen Elements entlang der definierten Bewegungsbahn zu erwartenden Messwert festgestellt wird.

7. Verfahren zur Detektion von Manipulationsversuchen an einem Zweiradschloss, insbesondere einem Rahmenschloss (11), nach zumindest einem der vorstehenden Ansprüche, mit einem Sensor (41, 45) zum dreidimensionalen magnetischen Erfassen verschiedener Stellungen eines entlang einer definierten Bewegungsbahn beweglichen Elements des Schlosses, insbesondere
- eines zwischen einer Offenstellung und einer Geschlossenstellung beweglichen Bügels (17),
- eines zwischen einer Verriegelungsstellung und einer Entriegelungsstellung beweglichen Riegels (19) zum Verriegeln des Bügels (17) in der Geschlossenstellung,
- eines Übertragungselements (31) zur antriebswirksamen Kopplung des Riegels (19) oder des Bügels (17) mit einem Antriebsmotor (29) des Schlosses oder
- eines mit dem Riegel (19), dem Bügel (17) oder dem Übertragungselement (31) bewegungsgekoppelten Kopplungselements (33),
wobei das Verfahren die folgenden Schritte umfasst:
- Erfassen eines magnetischen Messwerts mittels des Sensors (41, 45),
- Auswerten des erfassten Messwerts im Hinblick auf eine Übereinstimmung mit einem für eine der Stellungen des beweglichen Elements entlang der definierten Bewegungsbahn zu erwartenden Messwert,
- Zuordnen einer jeweiligen Stellung des beweglichen Elements zu dem Messwert, falls eine Übereinstimmung vorliegt,
- andernfalls Feststellen eines Manipulationsversuchs.

8. Verfahren nach Anspruch 7,
ferner umfassend:
- Ausgeben eines Alarms, falls ein Manipulationsversuch festgestellt wurde.

9. Verwendung eines zum dreidimensionalen magnetischen Erfassen ausgebildeten Sensors (41, 45) in einem Zweiradschloss, insbesondere einem Rahmenschloss (11), nach einem der Ansprüche 1 bis 6, wobei der Sensor (41, 45) verschiedene Stellungen eines entlang einer definierten Bewegungsbahn beweglichen Elements des Schlosses erfasst,
zur Detektion von Manipulationsversuchen anhand einer Abweichung eines mittels des Sensors (41, 45) erfassten Messwerts von einem für eine der Stellungen des beweglichen Elements entlang der definierten Bewegungsbahn zu erwartenden Messwert.

## Claims

1. A two-wheeler lock, in particular a frame lock (11), which is preferably at least partly drivable in a motorized manner,
comprising a sensor (41, 45) for detecting different positions of an element of the lock movable along a defined movement path,
wherein the movable element has a permanent magnet (43, 47, 49) and the sensor (41, 45) is configured as a magnetic sensor,
**characterized in that**
the magnetic sensor (41, 45) is configured for a three-dimensional magnetic detection to detect positions or movements of the movable element differing from the defined movement path and/or to detect manipulation attempts carried out by means of external magnets.

2. A two-wheeler lock in accordance with claim 1,
wherein the movable element is
- a hoop (17) movable between an open position and a closed position;
- a latch (19) movable between a locked position and an unlocked position for latching the hoop (17) in the closed position;
- a transmission element (31) for the drive-effective coupling of the latch (19) or of the hoop (17) to a drive motor (29) of the lock; or
- a coupling element (33) movement-coupled to the latch (19), to the hoop (17) or to the transmission element (31).

3. A two-wheeler lock in accordance with claim 1 or claim 2,
wherein the magnetic sensor (41, 45) is configured as a 3D magnetic sensor or as a 3D Hall sensor.

4. A two-wheeler lock in accordance with at least one of the preceding claims, wherein the movable element is supported such that it has a single degree of freedom.

5. A two-wheeler lock in accordance with at least one of the preceding claims, further comprising an evaluation apparatus which is configured to evaluate a measured magnetic value detected by means of the sensor (41, 45) with respect to an agreement with a measured value to be expected for one of the positions of the movable element along the defined movement path.

6. A two-wheeler lock in accordance with claim 5,
further comprising an alarm apparatus for outputting an alarm, with the evaluation apparatus being configured to control the alarm apparatus to output an alarm when no agreement is determined on an evaluation of a detected measured value with a measured value to be expected for one of the positions of the movable element along the defined movement path.

7. A method of detecting manipulation attempts at a two-wheeler lock, in particular at a frame lock (11), in accordance with at least one of the preceding claims, comprising a sensor (41, 45) for a three-dimensional magnetic detection of different positions of an element of the lock movable along a defined movement path, in particular
- a hoop (17) movable between an open position and a closed position;
- a latch (19) movable between a locked position and an unlocked position for latching the hoop (17) in the closed position;
- a transmission element (31) for the drive-effective coupling of the latch (19) or of the hoop (17) to a drive motor (29) of the lock; or
- a coupling element (33) movement-coupled to the latch (19), to the hoop (17) or to the transmission element (31),
wherein the method comprises the following steps:
- detecting a magnetic measured value by means of the sensor (41, 45);
- evaluating the detected measured value with respect to an agreement with a measured value to be expected for one of the positions of the movable element along the defined movement path;
- associating a respective position of the movable element with the measured value if an agreement is present; and
- otherwise determining a manipulation attempt.

8. A method in accordance with claim 7,
further comprising:
- outputting an alarm if a manipulation attempt has been determined.

9. Use of a sensor (41, 45) configured for a three-dimensional magnetic detection in a two-wheeler lock, in particular in a frame lock (11), in accordance with any one of the claims 1 to 6, wherein the sensor (41, 45) detects different positions of an element of the lock movable along a defined movement path,
for detecting manipulation attempts with reference to a deviation of a measured value detected by means of the sensor (41, 45) from a measured value to be expected for one of the positions of the movable element along the defined movement path.

## Revendications

1. Antivol pour deux-roues, en particulier antivol de cadre (11), de préférence susceptible d'être entraîné au moins partiellement par moteur,
comportant un capteur (41, 45) pour détecter différentes positions d'un élément de l'antivol, mobile le long d'une trajectoire de mouvement définie, l'élément mobile présentant un aimant permanent (43, 47, 49) et le capteur (41, 45) étant réalisé sous forme de capteur magnétique,
**caractérisé en ce que**
le capteur magnétique (41, 45) est réalisé pour une détection magnétique tridimensionnelle, afin de détecter des positions ou des mouvements de l'élément mobile qui s'écartent de la trajectoire de mouvement définie et/ou des tentatives de sabotage effectuées au moyen d'aimants externes.

2. Antivol pour deux-roues selon la revendication 1,
dans lequel l'élément mobile est
- un étrier (17) mobile entre une position ouverte et une position fermée,
- un verrou (19) mobile entre une position verrouillée et une position déverrouillée et destiné à verrouiller l'étrier (17) dans la position fermée,
- un élément de transmission (31) destiné à coupler en termes d'entraînement le verrou (19) ou l'étrier (17) à un moteur d'entraînement (29) de l'antivol, ou
- un élément d'accouplement (33) couplé en mouvement au verrou (19), à l'étrier (17) ou à l'élément de transmission (31).

3. Antivol pour deux-roues selon la revendication 1 ou 2,
dans lequel le capteur magnétique (41, 45) est réalisé sous forme de capteur de champ magnétique 3D ou de capteur de Hall 3D.

4. Antivol pour deux-roues selon l'une au moins des revendications précédentes,
dans lequel l'élément mobile est monté de manière à présenter un seul degré de liberté.

5. Antivol pour deux-roues selon l'une au moins des revendications précédentes,
comprenant en outre un dispositif d'évaluation qui est réalisé pour évaluer une valeur de mesure magnétique, détectée au moyen du capteur (41, 45), à l'égard d'une conformité à une valeur de mesure à attendre pour l'une des positions de l'élément mobile le long de la trajectoire de mouvement définie.

6. Antivol pour deux-roues selon la revendication 5,
comprenant en outre un dispositif d'alarme pour émettre une alarme, le dispositif d'évaluation étant réalisé pour piloter le dispositif d'alarme en vue d'émettre une alarme si, lors d'une évaluation d'une valeur de mesure détectée, aucune conformité à une valeur de mesure à attendre pour l'une des positions de l'élément mobile le long de la trajectoire de mouvement définie n'est constatée.

7. Procédé pour détecter des tentatives de sabotage sur un antivol pour deux-roues, en particulier sur un antivol de cadre (11), selon l'une au moins des revendications précédentes, comportant un capteur (41, 45) pour la détection magnétique tridimensionnelle de différentes positions d'un élément de l'antivol, mobile le long d'une trajectoire de mouvement définie, en particulier
- d'un étrier (17) mobile entre une position ouverte et une position fermée,
- d'un verrou (19) mobile entre une position verrouillée et une position déverrouillée et destiné à verrouiller l'étrier (17) dans la position fermée,
- d'un élément de transmission (31) destiné à coupler en termes d'entraînement le verrou (19) ou l'étrier (17) à un moteur d'entraînement (29) de l'antivol, ou
- d'un élément d'accouplement (33) couplé en mouvement au verrou (19), à l'étrier (17) ou à l'élément de transmission (31),
le procédé comprenant les étapes suivantes consistant à :
- détecter une valeur de mesure magnétique à l'aide du capteur (41, 45),
- évaluer la valeur de mesure détectée à l'égard d'une conformité à une valeur de mesure à attendre pour l'une des positions de l'élément mobile le long de la trajectoire de mouvement définie,
- associer une position respective de l'élément mobile à la valeur de mesure, s'il existe une conformité,
- sinon, constater une tentative de sabotage.

8. Procédé selon la revendication 7,
consistant en outre à :
- émettre une alarme si une tentative de sabotage a été constatée.

9. Utilisation d'un capteur (41, 45) réalisé pour la détection magnétique tridimensionnelle dans un antivol pour deux-roues, en particulier dans un antivol de cadre (11) selon l'une des revendications 1 à 6, le capteur (41, 45) détectant différentes positions d'un élément de l'antivol, mobile le long d'une trajectoire de mouvement définie,
pour détecter des tentatives de sabotage sur la base d'un écart d'une valeur de mesure détectée au moyen du capteur (41, 45) par rapport à une valeur de mesure à attendre pour l'une des positions de l'élément mobile le long de la trajectoire de mouvement définie.
